# EUROPÄISCHE PATENTSCHRIFT

(11) **EP 3 611 216 B1**
(45) Veröffentlichungstag und Bekanntmachung des Hinweises auf die Patenterteilung: **07.10.2026**
(21) Anmeldenummer: 18189074.0
(22) Anmeldetag: 15.08.2018
(51) Int. Cl.: C08G 77/14

(54) **LINEARE POLYDIMETHYLSILOXAN-POLYOXYALKYLEN-BLOCKCOPOLYMERE DES STRUKTURTYPS ABA**
LINEAR POLYDIMETHYLSILOXANE POLYOXYALKYLENE BLOCK COPOLYMERS OF STRUCTURE TYPE ABA
COPOLYMÈRES BLOC DE POLYDIMÉTHYLSILOXANE-POLYOXYALKYLÈNE LINÉAIRES DE TYPE DE STRUCTURE ABA

(43) Veröffentlichungstag der Anmeldung: 19.02.2020
(73) Patentinhaber: Evonik Operations GmbH, 45128 Essen (DE)
(72) Erfinder: KNOTT, Wilfried, 45355 Essen (DE); DUDZIK, Horst, 45326 Essen (DE); HENNING, Frauke, 45259 Essen (DE)
(74) Vertreter: Evonik Patent Association

(56) Entgegenhaltungen:
- EP-A1- 0 003 285
- EP-A2- 0 025 822
- EP-A2- 1 935 923
- WO-A2-2014/104388
- WO-A2-2014/104390
- DE-A1- 1 545 110
- US-A- 2 527 591
- US-A- 4 066 680
- US-A1- 2003 109 659
- US-A1- 2011 021 693
- US-A1- 2013 267 665
- US-A1- 2015 274 973

## Beschreibung

Die Erfindung betrifft ein Verfahren zur Herstellung von SiOC-verknüpften, linearen Polydimethylsiloxan-Polyoxyalkylen-Blockcopolymeren des Strukturtyps ABA, lineare SiOC-verknüpfte Polydimethylsiloxan-Polyoxyalkylen-Blockcopolymere des Strukturtyps ABA erhältlich gemäß dem Verfahren, sowie deren Verwendung.

Zur Herstellung der wirtschaftlich bedeutsamen Klasse der SiOC-verknüpften Polyethersiloxane, auch als Siliconpolyether oder Siloxan-Polyether-Copolymere bezeichnet, bedient man sich nach heutigem Stand der Technik mehrerer Verfahrensvarianten.

Klassischerweise werden SiOC-Verknüpfungen durch die Reaktion eines Siloxans mit einer am Siliciumatom gebundenen Abgangsgruppe (z.B. Halogen) und einem Alkohol oder Polyetherol gebildet. Letzterer wird üblicherweise zuvor durch Alkoxylierung von monohydroxyfunktionellen Startverbindungen wie zum Beispiel Butanol mit Alkylenoxiden gewonnen. Besonders Chlorsiloxane sind als Ausgangsverbindungen für diesen Reaktionstyp verbreitet. Chlorsiloxane sind jedoch schwierig zu handhaben, da sie äußerst reaktionsfreudig sind. Ihr Einsatz ist weiterhin mit dem Nachteil verbunden, dass der im Verlauf der Reaktion gebildete Chlorwasserstoff eine Handhabung auf korrosionsbeständige Anlagen beschränkt und zu ökologischen Problemen führt. Darüber hinaus können in Gegenwart von Chlorsiloxanen und Alkoholen bzw. Polyetherolen organische Chlorverbindungen entstehen, die aus toxikologischen Gründen nicht wünschenswert sind. Weiterhin ist es nicht einfach, bei der Reaktion eines Chlorsiloxans mit einem Alkohol oder Polyetherol einen quantitativen Umsatz zu erreichen, so dass die OH-funktionelle Komponente oft in einem stöchiometrischen Überschuss bezogen auf die SiCI-Funktionen der Siloxankomponente eingesetzt werden muss. Die Verwendung eines Polyetherüberschusses bedeutet in der Praxis, dass in den so hergestellten Siliconpolyethern unvermeidbar größere Mengen an unreagierten Überschusspolyethern enthalten sind, die die Konzentration der tensidisch wirksamen Siliconpolyether herabsetzen und die anwendungstechnischen Eigenschaften der Zielprodukte beeinträchtigen. Häufig müssen bei der Chlorsiloxanroute Basen als HCl-Fänger eingesetzt werden, um gute Umsätze zu erzielen. Durch Einsatz dieser Basen entstehen große Salzmengen, deren Entfernung im industriellen Maßstab Schwierigkeiten bereitet.

Als Alternative zu diesem Verfahren bietet sich an, Alkohole oder Polyetherole mit Wasserstoffsiloxanen umzusetzen, in denen Wasserstoff direkt am Silicium gebunden ist. Unter geeigneten Bedingungen kommt es hier bei Ausbildung der SiOC-Bindung lediglich zur Abspaltung von Wasserstoff. Diese dehydrogenative Kondensation läuft nur in Anwesenheit eines Katalysators ab. US-A-5147965 verweist auf ein Verfahren, das in der japanischen Patentveröffentlichung JP480-19941 beschrieben wird und bei dem ein Wasserstoffsiloxan mit einem Alkohol unter Zugabe von Alkalimetallhydroxiden oder Alkalimetallalkoxiden umgesetzt wird. Nachteilig an diesem Verfahren ist, dass die Katalysatoren nach beendeter Reaktion neutralisiert werden müssen und die dabei entstehende Salzfracht zwar geringer als die des Chlorsiloxanverfahrens ist, aber dennoch aufwändig abfiltriert werden muss. EP-A-0475440 beschreibt ein Verfahren, bei dem Wasserstoffsiloxane mit einem Alkohol unter Zugabe einer organischen Säure in Gegenwart eines Pt-Salzes umgesetzt werden. Für die Reaktion ist es unabdingbar, dass sowohl große Mengen an organischer Säure (0,1 bis 1 mol bezogen auf Alkohol), Toluol als Lösungsmittel und ein Platinsalz eingesetzt werden. Da sowohl Toluol als auch Säure im Endprodukt unerwünscht sind, müssen diese nach Reaktionsende wiederum abgetrennt werden. Platinsalze sind zudem nicht nur teuer, sondern aus physiologischer Sicht auch nicht unbedenklich. Gerade im Bereich der kosmetischen Industrie gibt es den Wunsch nach Produkten frei von Platin.

Ohne den Einsatz von Schwermetallen kommt das in J. Boyer, R. J. P. Corriu, R. Perz, C. Reye, J. Organomet. Chem. 1978, 157, 153-162 beschriebene Verfahren aus. Dabei werden Salze wie z.B. Kaliumtartrat, -phthalat oder -formiat als heterogene Katalysatoren eingesetzt. Die Umsetzungen erfordern allerdings den äquimolaren Einsatz der Salze bezogen auf die SiH-Einheiten und gelingen nur bei hohen Temperaturen von ca. 180 °C. Sowohl die drastischen Bedingungen als auch die notwendigen großen Salzmengen machen dieses Verfahren für den technischen Maßstab unattraktiv.

In den Patentanmeldungen DE10312636 und DE10359764 werden borhaltige Katalysatoren für die dehydrogenative Kondensation von Wasserstoffsiloxanen und Alkoholen eingesetzt. So attraktiv diese dehydrogenativen Verfahren zur SiOC-Verknüpfung gerade in Bezug auf die Vermeidung flüssiger und/ oder fester Nebenprodukte auch sind, so stehen sowohl der Einsatz kostspieliger und toxischer Katalysatoren, wie zum Beispiel Tris(pentafluorophenyl)-boran, als auch die sichere Handhabung des bei der Synthese entstehenden Wasserstoffgases einer breiten Anwendung der Technologie entgegen.

Vor diesem Hintergrund besteht die zu lösende technische Aufgabe darin, die Bereitstellung linearer SiOC-verknüpfter Polydimethylsiloxan-Polyoxyalkylen-Blockcopolymerer des Strukturtyps ABA unter Überwindung der diskutierten Schwierigkeiten zu ermöglichen.

Überraschenderweise wurde nun gefunden, dass die Bereitstellung linearer, SiOC-verknüpfter Polyethersiloxane des Strukturtyps ABA ausgehend von zyklischen Siloxanen, insbesondere D₄ und/oder D₅, gelingt, indem man äquilibriertes trifluormethansulfonsaures Acetoxysiloxan mit Polyethermonoolen in Gegenwart von Puffergemischen und gegebenenfalls einem zusätzlichen Kondensationskatalysator sowie gegebenenfalls in Gegenwart eines inerten Lösungsmittels umsetzt, wobei das äquilibrierte trifluormethansulfonsaure Acetoxysiloxan insbesondere erhältlich ist durch Trifluormethansulfonsäure katalysierte Umsetzung zyklischer Siloxane, insbesondere D₄ und/oder D₅, mit Acetanhydrid in Gegenwart von Essigsäure. Dieses ist ein Gegenstand der Erfindung. D₄ steht für Octamethylcyclotetrasiloxan. D₅ steht für Decamethylcyclopentasiloxan.

Gegenstand der Erfindung ist ein Verfahren zur Herstellung von SiOC-verknüpften, linearen Polydimethylsiloxan-Polyoxyalkylen-Blockcopolymeren des Strukturtyps ABA wie in Anspruch 1 angegeben.

Lineare SiOC-verknüpfte Polydimethylsiloxan-Polyoxyalkylen-Blockcopolymere des Strukturtyps ABA, erhältlich gemäß dem erfindungsgemäßen Verfahren, entsprechen einem weiteren Gegenstand der Erfindung und zeichnen sich vorteilhafterweise durch eine besonders hohe Reinheit aus.

Zugänge zu Acetoxy-funktionellen Siloxanen sind in der Literatur beschrieben.

So ist aus etlichen Publikationen und Schutzrechtsersuchen die nicht äquilibrierende Öffnung einfacher unverzweigter Siloxanzyklen mit Acetanhydrid zu kurzkettigen, kettenterminale Acetoxygruppen tragenden Siloxanen in Gegenwart von Katalysatoren bekannt.

Borisov und Sviridova beschreiben die Öffnung zyklischer Dimethylsiloxane mit Acetanhydrid in Gegenwart katalytischer Mengen Eisen(III)chlorid zu kurzkettigen α,ω-Acetoxysiloxanen (S. N. Borisov, N. G.Sviridova, J. Organomet. Chem. 11 (1968), 27-33). Lewis et al. widmet sich in der US4066680 der Herstellung kurzkettiger α,ω-Siloxandiole, wobei er Octamethylcyclotetrasiloxan mit Acetanhydrid und Essigsäure an säurebehandelten Bleicherden umsetzt und die so erhaltenen Mischungen kurzkettiger α,ω-Acetoxysiloxane in alkalisch eingestelltem Wasser hydrolysiert. Lewis schreibt hierbei der die de-facto Raum-Zeit-Ausbeute des Verfahrens mindernden Essigsäure, deren Anteil 2 bis 20% der Reaktionsmischung ausmacht, neben der Funktion als Solvens auch noch die Funktion eines Co-Katalysators zu. Die nach dieser Lehre als Vorprodukt erhaltenen α,ω-Acetoxysiloxane sind jedoch keinesfalls Äquilibrate, wie zweifelsfrei aus Example 2 der Schrift hervorgeht, da die gaschromatographische Analyse für die gesamte Reaktionsmischung einen Anteil von 14,20% D₄ beziehungsweise nach Abzug der mit einem Gehaltsanteil von 19,04% in der Mischung enthaltenen Essigsäure einen Anteil von 17,53% D₄ bezogen auf die reine Siloxanmatrix ausweist. Berücksichtigt man noch die Gehaltsanteile der üblicherweise mitbetrachteten, niedermolekularen Cyclen D₃ (1,55%) , D₅ (10,42%) und D₆ (0,54), so liegt der Gehalt an Cyclosiloxanen bei 30,04% und damit weit über dem sonst üblichen Gleichgewichtsanteil von etwa 13 Gewichtsprozent den man bei Äquilibrierungen gewärtigt (siehe hierzu WO 95/01983, Seite 1, Zeilen 26 bis 33).

Aus US3346610 ist gleichfalls ist ein Zugang zu Acetoxygruppen tragenden, kurzkettigen Siloxanen bekannt, der auf der Metallhalogenid induzierten Acetoxy-Modifizierung gespannter cyclischer Siloxane beruht, indem man diese mit Acetoxygruppen enthaltenden Silikonverbindungen zur Umsetzung bringt. Eine Vielzahl Friedel-Crafts-aktiver Metallhalogenide fungiert hier als Katalysator, wobei Zinkchlorid als bevorzugt ausgelobt wird. Eine spezielle Zielsetzung der US3346610 liegt in der Acetoxy-Modifizierung gespannter Diorganosiloxancyclen unter bewusster Vermeidung von Äquilibriervorgängen.

Der Stand der Technik bezieht sich somit auf Arbeiten, die die Öffnung cyclischer Siloxane - hierbei manchmal gespannter Cyclosiloxane - mit Acyloxygruppen enthaltenden Reaktanden vorsehen und deren Zielsetzung es ist, definierte lineare kurzkettige und das auf dem Wege der fraktionierten Destillation noch zu separierende Siloxanspezies zu gewinnen.

Jedoch sind die auf diesem Wege synthetisierten, Molmassen-definierten, kettenreinen Acetoxymodifizierten Siloxanverbindungen nicht geeignet für die Herstellung von organomodifizierten Siloxanen insbesondere Polyethersiloxanen, die Eingang in anspruchsvolle technische Anwendungen wie z.B. in die PU-Schaumstabilisierung oder in die Entschäumung von Kraftstoffen, etc. nehmen. Wirkstoffe, die ein derartiges Anwendungsgebiet effektiv adressieren, sind stets von einer breiten Polymerverteilung umfassend hohe, mittlere und niedrige Molmassen gekennzeichnet, da den darin enthaltenen Oligomeren in Abhängigkeit von ihrer Molmasse und damit ihres Diffusionsverhaltens sehr oft differenzierte tensidische Aufgaben in unterschiedlichen Zeitfenstern des jeweiligen Prozesses zuzuschreiben sind.

Ältere Routen zum Beispiel zur Herstellung verzweigter SiOC-verknüpfter Silikonpolyether bedienen sich unter anderem auch der säurekatalysierten Umsetzung von Chlorsilanen mit Essigsäure in Gegenwart von Siloxancyclen (US4380451). Neben den eingangs dargelegten prinzipiellen Nachteilen einer Chlorchemie ist diesen Verfahren zu eigen, dass der Austausch von Silicium-gebundenem Chlor gegen Acetoxyfunktionen ein unvollkommener ist, wie aus der (in ibid., Spalte 4, 1. Zeile) vorgeschlagenen Siloxan-intermediatformel hervorgeht. Ähnlich problematisch ist die Lehre der EP0000328B1 zu sehen, die ein Verfahren zur Herstellung von linearen und verzweigten äquilibrierten Organopolysiloxanen beschreibt durch Umsetzen eines Chlorsilans oder partiellen Hydrolysaten hiervon mit Organosiloxanen und einbasischen Carbonsäuren in Gegenwart eines sauren Äquilibrierkatalysators. Auf die GC-Analytik der dort offenbarten α,ω-Diacetoxy-polydimethylsiloxane abstellend, heißt es (ibid., Seite 6, Zeile 30), dass die in geringen Mengen vorliegenden Chlorsiloxane bei der Auswertung des GC nicht berücksichtigt wurden.

Ebenfalls sind Acyloxyorganopolysiloxane und hierbei insbesondere Organosiloxane mit endständigen Acyloxygruppen als Ausgangsmaterialien für Folgereaktionen bekannt. So können beispielsweise die Acyloxygruppen in einem Diorganosiloxan hydrolysiert werden, worauf das Hydrolysat dehydratisiert und das dehydratisierte Hydrolysat unter Bildung von fließfähigem Diorganopolysiloxan polymerisiert werden kann. Diese fließfähigen Polysiloxane eignen sich als Ausgangsmaterialien für die Herstellung viskoser Öle und Kautschuke, die zu Silikonelastomeren gehärtet werden können.

Mit endständigen Acyloxygruppen versehene Organosiloxane können beispielsweise durch Umsetzung eines Alkylsiloxans und einer organischen Säure und/oder deren Anhydrid in Gegenwart von Schwefelsäure als Katalysator erhalten werden. Ein solches Verfahren ist in der US-Patentschrift 2910496 (Bailey et al.) beschrieben. Obwohl man nach diesem Verfahren prinzipiell auch Organosiloxane mit endständigen Acyloxygruppen erhält, so haftet dem Prozess der Nachteil an, dass das Reaktionsprodukt aus einer Mischung von acyloxyhaltigen Siloxanen und Acyloxygruppen tragenden Silanen unterschiedlicher Zusammensetzung besteht. Insbesondere führt die Lehre hierzu aus, dass aus M-, D-und T-Einheiten zusammengesetzte Alkylsiloxancopolymere durch das Verfahren in Trimethylacyloxysilan, Di-Acyloxydimethylsiloxan und Methyltriacyloxysilan gespalten werden. Somit erhält Bailey selbst nach der 40 stündigen Umsetzung von Octamethylcyclotetrasiloxan mit Essigsäureanhydrid und Essigsäure bei 136 bis 147°C und nach Neutralisation der als Katalysator eingesetzten Schwefelsäure, Abtrennen der Salze und Abziehen von Wasser, restlicher Essigsäure und Acetanhydrids ein komplexes Stoffgemisch und keinesfalls ein Äquilibrat, das er dann der fraktionierten Destillation unterwirft (siehe Beispiel, ibid.). Die stoffliche Identität der dabei erhaltenen Fraktionen II und IV bleibt unklar, so dass es hiernach schwierig ist, definierte Produkte zu erhalten, beziehungsweise diese in hohen Ausbeuten vom Gemisch abzutrennen.

Sich auf Bailey et al. (US2910496) beziehend, lehrt die DE-OS1545110 (A1) (Omietanski et al.) ein Verfahren, bei dem eine Acyloxygruppe eines Acyloxysiloxans mit der Hydroxylgruppe eines Polyoxyalkylenhydroxypolymers unter Bildung eines Siloxan-oxyalkylen-Blockmischpolymers und einer Carbonsäure umgesetzt wird, wobei die Carbonsäure aus dem Reaktionsgemisch entfernt wird. Die dort beschriebenen, lösemittel- und katalysatorfrei geführten Umsetzungen verlangen zum Teil beträchtliche Reaktionszeiten (bis zu 11,5 Stunden (Beispiel 1), sehr hohe, produktbelastende Umsetzungstemperaturen (150 bis 160°C (Beispiel 1) und das Anlegen eines Hilfsvakuums beziehungsweise das Strippen der Reaktionsmatrix mit trockenem Stickstoff über die gesamte Reaktionsdauer und erreichen trotz der harschen Umsetzungsbedingungen auf Produktstufe nicht immer vollständigen Umsatz (Beispiel 9, ibid.).

Aus produktionstechnischer Sicht gereichen insbesondere die Kombination aus hohen Umsetzungstemperaturen und langen Reaktionszeiten sowie die nicht vorhersehbare Produktqualität dem von Omietanski et al. beschriebenen Prozess zum Nachteil.

Die US3595885 lehrt ein Verfahren zur Herstellung äquilibrerter Acyloxy-funktionalisierter Siloxane ausgehend von äquilibrierten Chlorsiloxanylsulfaten durch Umsetzung mit Carbonsäuren und/ oder Carbonsäuresalzen und/oder Carbonsäureanhydriden. Die Lehre führt aus (Spalte 5/ Zeilen 72-74), dass man mit Schwefelsäuregruppen enthaltenden Produkten rechnen muss (-SO₄- und/ oder -OSO₃H gebunden an Si), wenn man reine Carbonsäuren und/ oder Carbonsäureanhydride einsetzt. Die den verbleibenden Carbonsäuresalz-Weg stützenden Beispiele belegen jedoch auch nicht die Schwefelsäure-Freiheit der erhaltenen Acyloxysiloxane, was aber für die Zielstellung der dort beschriebenen Substanzen als Komponenten in kalthärtenden Silikonkautschuken bedeutungslos ist, da man diese mit hydroxyfunktionellen Silikonen in Gegenwart eines Zinnkatalysators unter Hydrolyse der Siloxanylsulfat-Funktionen zur Umsetzung bringt. Diese von fraglicher Produktqualität gekennzeichnete Chlorroute ist für anspruchsvolle Anwendungen mithin nicht geeignet (siehe hierzu auch Beispiel IV, < 0,5% Chlorgehalt).

Zudem ist die dortige Auslobung äquilibrierter Acyloxy-funktionalisierter Siloxane nicht zutreffend. Sollten zum Beispiel in die Silikongerüste eingebaute, verbrückende Sulfatogruppen durch das Behandeln mit Carbonsäuresalzen herausgelöst werden, so entstehen dabei stets kürzere, mit Acyloxygruppen verschlossene Spaltprodukte, so dass die entstehende Mischung und das insbesondere im Vergleich mit dem Ausgangsmaterial keinesfalls ein echtes Äquilibrat ist.

Überraschenderweise wurde im Rahmen der vorliegenden Erfindung gefunden, dass äquilibrierte α,ω-Diacetoxy-polydimethylsiloxane durch die Umsetzung von Siloxancyclen (insbesondere umfassend D₄ und/oder D₅) mit Acetanhydrid in Gegenwart von Trifluormethansulfonsäure und Essigsäure hergestellt werden können.

Weiterhin wird im Rahmen der vorliegenden Erfindung ein Verfahren zur Herstellung trifluormethansulfonsaurer äquilibrierter α,ω-Diacetoxypolydimethylsiloxane beschrieben, wobei man zyklische Siloxane, insbesondere umfassend D₄ und/oder D₅, unter Einsatz von Trifluormethansulfonsäure als Katalysator und Essigsäure mit Acetanhydrid umsetzt.

Eine beispielhafte, aber auch bevorzugte Ausführungsform im Rahmen des vorgenannten Verfahrens sieht vor, unter guter Durchmischung der Reaktanden diese mit vorzugsweise 0,1 bis 0,3 Massenprozent Trifluormethansulfonsäure bezogen auf die gesamte Reaktionsmasse zu beaufschlagen und dann vorzugsweise auf Temperaturen von 140 bis 160°C für die Dauer von 4 bis 8 Stunden zu erhitzen. Hierbei wird aus der anfänglich leicht trüben Reaktionsmischung ein klares, äquilibriertes trifluormethansulfonsaures α,ω-Diacetoxy-polydimethylsiloxan. Diese Reaktionsprodukte können vorteilhafterweise auch nach längerer Lagerung mit gutem Erfolg zur Herstellung von SiOC-verknüpften, linearen Polydimethylsiloxan-Polyoxyalkylen-Blockcopolymeren des Strukturtyps ABA im Sinne dieser Erfindung eingesetzt werden.

Dem Fachmann verständlich, beeinflussen hierbei unter Normaldruckbedingungen (1013,25 hPa) und bei konstant gehaltenem Verhältnis von Acetanhydrid zu zyklischen Siloxanen sowohl die gewählte Reaktionstemperatur, als auch die gewählte Menge zugesetzten Katalysators (Trifluormethansulfonsäure) sowie die gewählte Reaktionszeit den erzielten Acetylierungsgrad und somit auch die individuelle Lage des sich unter diesen Bedingungen einstellenden Äquilibriergleichgewichtes. So weisen die bei der besonders bevorzugten Reaktionstemperatur von 150°C und bei 0,1 Massen% Trifluormethansulfonsäure-Zusatz hergestellten trifluormethansulfonsauren α,ω-Diacetoxypolydimethyl-siloxane nach 6 Stunden Reaktionszeit sehr konstant Acetylierungsgrade von etwa 80 Val-% (mit etwa 20 Val-% freien Acetanhydrids) bezogen auf die Menge eingesetzten Acetanhydrids auf. Hierbei entspricht die Stoffmenge in Val der Stoffmenge in Mol multipliziert mit der jeweiligen stöchiometrischen Wertigkeit. Acetanhydrid besitzt eine stöchiometrische Wertigkeit von 2, da es formal Lieferant zweier Acetoxygruppen ist. Ein Anheben der Reaktionstemperatur auf 160°C verbunden mit einer Erhöhung des Trifluormethansulfonsäure-Zusatzes auf 0,2% führt nach 6 Stunden Reaktionszeit wiederum sehr reproduzierbar zu Acetylierungsgraden von etwa 90 Val-% (mit etwa 10 Val-% freien Acetanhydrids) bezogen auf die Menge eingesetzten Acetanhydrids. Berücksichtigend, dass die Trifluormethansulfonsäure einen erheblichen Kostenfaktor darstellt, können im Rahmen der erfinderischen Lehre leicht Optimierungen innerhalb des beschriebenen Parameterfeldes vorgenommen werden.

So reichen für die reproduzierbare, industrielle Herstellung der erfindungsgemäß einsetzbarenα,ω-Diacetoxypolydimethylsiloxane wenige orientierende Laborversuche aus, um die individuelle Lage des sich bei vorgegebenen Bedingungen konstant einstellenden Äquilibriergleichgewichtes mit Hilfe der ²⁹Si-NMR-, ergänzend mit Hilfe der ¹³C-NMR- und auch ¹H-NMR-Spektroskopie zu ermitteln und somit die optimalen Produktionsbedingungen festzulegen.

Im Rahmen der vorliegenden Erfindung konnte weiterhin in unerwarteter Weise gefunden werden, dass der zusätzliche Einsatz von Essigsäure in dem Verfahren zur Herstellung trifluormethansulfonsaurer äquilibrierter α,ω-Diacetoxypolydimethylsiloxane eine weitere Verbesserung der Äquilibrierqualität ermöglicht. Der zusätzliche Einsatz von Essigsäure ist obligat. Er wirkt sich einerseits positiv auf das Erreichen der Acetoxyfunktionalisierung aus und ermöglicht diesbezüglich eine Ausbeuteverbesserung bezogen auf das eingesetzte Essigsäureanhydrid, vor allem aber ermöglicht er die Gewährleistung überragender Äquilibrierergebnisse bereits nach sehr kurzer Reaktionszeit (zum Beispiel nach 4 Stunden/ Beispiel 6).

Als Indikator für das Erreichen des Äquilibriergleichgewichtes kann der gaschromatographisch bestimmte Gesamtcylengehalt definiert als die Summe der D₄-, D₅-, D₆-Gehalte bezogen auf die Siloxanmatrix und festgestellt nach der Derivatisierung der α,ω-Diacetoxypolydimethylsiloxane zu den entsprechenden α,ω-Diisopropoxypolydimethylsiloxanen herangezogen werden. Der erfindungsgemäße Einsatz der Essigsäure ermöglicht hier die problemlose Unterschreitung sonst üblicher Gleichgewichtsanteile von etwa 13 Gewichtsprozent. Demzufolge entspricht es einer bevorzugten Ausführungsform wenn Gleichgewichtsanteile des Gesamtcyclengehaltes von kleiner 13, vorzugsweise kleiner 12 Gewichtsprozent bei den linearen α,ω-Diacetoxypolydimethylsiloxanen realisiert werden.

Es entspricht somit einer besonders bevorzugten Ausführungsform der vorliegenden Erfindung, wenn bei der Herstellung trifluormethansulfonsaurer äquilibrierter α,ω-Diacetoxypolydimethylsiloxane Essigsäure in Mengen von 0,4 bis 3,5 Gewichtsprozent, vorzugsweise 0,5 bis 3 Gewichtsprozent, bevorzugt 0,8 bis 1,8 Gewichtsprozent, besonders bevorzugt in Mengen von 1,0 bis 1,5 Gewichtsprozent bezogen auf die Reaktionsmatrix bestehend aus Acetanhydrid und zyklischen Siloxanen zugefügt wird.

Beschrieben werden im Rahmen der Erfindung trifluormethansulfonsaure, äquilibrierte α,ω-Diacetoxypolydimethylsiloxane, der allgemeinen Formel 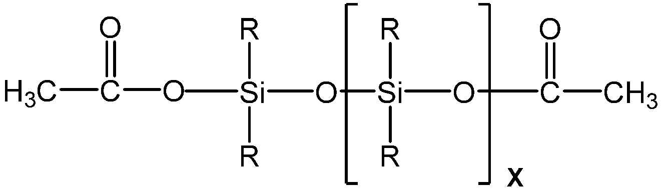
**mit R** = Methyl,
die eine mittlere mit ²⁹Si-NMR-Spektroskopie bestimmte Kettenlänge von 0 ≤ X ≤ 250, bevorzugt 5 ≤ X ≤ 100, besonders bevorzugt 10 ≤ X ≤ 30
aufweisen sowie
0,1 bis 0,3 Massenprozent Trifluormethansulfonsäure ,
und 5 bis 43 Val-%, bevorzugt 11 bis 25 Val-% freien Acetanhydrids bezogen auf das im α,ω-Diacetoxypolydimethylsiloxan chemisch gebundene Acetanhydrid-Äquivalent
enthalten.

Diese sind über das zuvor beschriebene Verfahren zugänglich.

Diese erfindungsgemäß einsetzbaren trifluormethansulfonsauren, äquilibrierten α,ω-Diacetoxypolydimethylsiloxane reagieren mit Polyethermonoolen, bereits bei mäßigen Temperaturen zügig und zudem vollständig zu SiOC-verknüpften Polyethersiloxanen hoher Reinheit.

Der im Rahmen dieser Erfindung verwendete Begriff der "Reinheit" bezogen auf die ABA-strukturierten, SiOC-verknüpften Siliconpolyether betrifft insbesondere deren erzielten Grad an Halogenid- und hier insbesondere deren Chlorid-Freiheit.

Chlorid-Freiheit ist immer wünschenswert und insbesondere dann gefordert, wenn die ABA-strukturierten, SiOC-verknüpften Siliconpolyether als tensidische Komponente zum Beispiel Eingang in Reinigungsformulierungen für die Reinigung von Magnetköpfen nehmen sollen. Die Bezahlung mit Kreditkarten bringt die mit Hautfetten, Kosmetika, Staub aber auch insbesondere mit Feuchtigkeit (zum Beispiel Hautschweiß) behafteten Kreditkarten in Kontakt mit einem Magnetkopf oder auch mit **Chiplesekontakten.** Durch die dauerhafte Benutzung des Kreditautomaten mit einer Vielzahl von Kreditkarten und dem damit einhergehenden Aufbau der Anschmutzung erhöht sich die Wahrscheinlichkeit von Fehlfunktionen bis hin zur Nichtakzeptanz der verwendeten Kreditkarte. Werden die mit Metalloxidrückständen belegten Kontaktflächen mit einer Reinigungsflüssigkeit gereinigt, so ist das Aufbringen korrosions-fördernder Chloridionen unbedingt zu vermeiden.

Die nach dem erfindungsgemäßen Verfahren, bei welchem man trifluormethansulfonsaures, äquilibriertes α,ω-Diacetoxypolydimethylsiloxan mit Polyethermonoolen in Gegenwart von Puffergemischen und gegebenenfalls einem zusätzlichen Kondensationskatalysator sowie gegebenenfalls in Gegenwart eines inerten Lösungsmittels umsetzt, erhältlichen linearen ABA-strukturierten, SiOC-verknüpften Polydimethylsiloxan-Polyoxyalkylen-Blockcopolymere sind ein weiterer Gegenstand der Erfindung.

Besonders bevorzugt einsetzbare Puffergemische bestehen aus Natriumtrichloracetat und Essigsäure oder aus Natriumacetat und Essigsäure. Die Verwendung dieser flüssigen Puffergemische, insbesondere der erfindungsgemäß besonders bevorzugten Puffergemische, ist aus Sicht der Produktion insbesondere gegenüber der Verwendung einfacher fester Basen von Vorteil, da sich die Dosierung einer Flüssigkeit immer einfacher als das Handhaben pulverförmiger Feststoffe gestaltet. Insbesondere ermöglicht die Verwendung der erfindungsgemäßen Puffergemische, besonders der bevorzugten Puffergemische, die Bereitstellung farbloser, respektive nahezu farbloser Polyethersiloxane.

Die nach dem erfindungsgemäßen Verfahren erhältlichen linearen ABA-strukturierten, SiOC-verknüpften Polydimethylsiloxan-Polyoxyalkylen-Blockcopolymere sind von hoher Reinheit und weisen vorzugsweise Chloridgehalte < 10 ppm auf und eignen sich unter anderem vorzüglich für Anwendungen der zuvor beschriebenen Art. Die Bestimmung des Chloridgehalts kann mit Hilfe etablierter Methoden via potentiometrischer Argentometrie oder aber der Ionenchromatographie (hier insbesondere in Anlehnung an die Vorschrift der ASTM D 7319-07- Norm) erfolgen. Da Korrosionsphänomene bekanntlich sowohl durch die Präsenz anorganischen Chlorids als auch durch die Gegenwart von Organochlorverbindungen hervorgerufen werden, ist unter Chloridgehalt im Rahmen der erfinderischen Lehre immer der analytisch erfassbare Gesamt-Chlorgehalt zu verstehen.

Erfindungsgemäß wurde gefunden, dass man die zügige und vollständige Umsetzung von trifluormethansulfonsauren, äquilibrierten α,ω-Diacetoxypolydimethylsiloxanen mit Polyethemonoolen unter Vermeidung von Verfärbungen des Reaktionsproduktes in Gegenwart von Puffergemischen und gegebenenfalls einem zusätzlichen Kondensationskatalysator wie zum Beispiel Trichloressigsäure durchführt. Der Einsatz von Trichloressigsäure entspricht einer besonders bevorzugten Ausführungsform der Erfindung.

In einer bevorzugten Ausführungsform der Erfindung zeichnet sich das Verfahren zur Herstellung von SiOC-verknüpften, linearen Polydimethylsiloxan-Polyoxyalkylen-Blockcopolymeren des Strukturtyps ABA dadurch aus, dass
man das Polyethermonool zunächst gegebenenfalls in Gegenwart eines inerten Lösungsmittels mit Puffergemischen und gegebenenfalls einem zusätzlichen Kondensationskatalysator beaufschlagt und dann mit trifluormethansulfonsaurem, äquilibriertem α,ω-Diacetoxypolydimethylsiloxan versetzt,
und dann die freigesetzte und die im System gegebenenfalls vorhandene Essigsäure gegebenenfalls unter Nutzung eines Azeotrop- bildenden Lösungsmittels zusammen mit dem Lösungsmittel thermisch abtrennt und das erhaltene SiOC-verknüpfte, lineare Polydimethylsiloxan-Polyoxyalkylen-Blockcopolymer durch das Hinzufügen einer Hilfsbase neutralisiert, filtriert und gegebenenfalls endstabilisiert.

Hierbei wird die Menge der zur Beaufschlagung des Polyethermonools eingesetzten Base im Puffergemisch vorzugsweise so bemessen, dass sie mindestens dem stöchiometrischen Äquivalent, bevorzugt mindestens dem 2-fachen stöchiometrischen Äquivalent der im α,ω-Diacetoxypolydimethylsiloxan enthaltenen Trifluormethansulfonsäure entspricht (siehe hierzu auch Beispiele 2 und 3).

Erfindungsgemäß bevorzugt, enthalten die verwendeten Puffergemische bereits Anteile des Kondensationskatalysators und hierbei besonders bevorzugt den Kondensationskatalysator in Form eines Salzes. Die im trifluormethansulfonsauren α,ω-Diacetoxypolydimethylsiloxan vorhandene Trifluormethansulfonsäure wird auf diese Weise neutralisiert und setzt dabei den Kondensationskatalysator aus seinem Salz in Freiheit.

Sollte die hierbei beschriebene Neutralisation im Falle der erfindungsgemäß besonders bevorzugt als Kondensationskatalysator eingesetzten Trichloressigsäure bereits zu einer Freisetzung von 0,2 bis 0,5 Massenprozent bezogen auf die Gesamtmenge der für die SiOC-Verknüpfungsreaktion vorgesehenen Reaktanden (nämlich α,ω-Diacetoxypolydimethylsiloxan plus Polyethermonool) führen, so wird eine gegebenenfalls vorzunehmende Beaufschlagung mit zusätzlichen Mengen an Trichloressigsäure für die erfolgreiche zügige Durchführung der Kondensationsreaktion verzichtbar, was einer bevorzugten Ausführungsform der Erfindung entspricht.

Die erfindungsgemäß besonders bevorzugt eingesetzten Puffergemische umfassen Natriumtrichloracetat und Essigsäure oder umfassen Natriumacetat und Essigsäure.

Bemisst sich die Menge der zur Beaufschlagung des Polyethermonools eingesetzten Base im Puffergemisch wie zuvor dargelegt an dem aus dem α,ω-Diacetoxypolydimethylsiloxan stammenden Trifluormethansulfonsäureäquivalent, so richtet sich die erfindungsgemäß besonders bevorzugt einzusetzende Trichloressigsäuremenge nach der Gesamtmenge der für die SiOC-Verknüpfungsreaktion vorgesehenen Reaktanden α,ω-Diacetoxypolydimethylsiloxan plus Polyethermonool).

Die im Rahmen einer bevorzugten Ausführungsform einzusetzende Trichloressigsäuremenge liegt erfindungsgemäß im Bereich von vorzugsweise 0,1 bis 0,7 Massenprozent, bevorzugt zwischen 0,2 bis 0,5 Massenprozent bezogen auf die Gesamtmenge der für die SiOC-Verknüpfungsreaktion vorgesehenen Reaktanden α,ω-Diacetoxypolydimethylsiloxan plus Polyethermonool).

Die Menge der im Rahmen einer bevorzugten Ausführungsform zur Lösung der Puffermischung eingesetzten Essigsäure wird vorzugsweise so gewählt, dass sie ausreicht, eine klare, von festen Salzanteilen freie Pufferlösung herzustellen, die man verlustfrei in die Reaktionsmatrix dosieren kann. Darüber hinaus gehende Einsatzmengen an Essigsäure sind für das erfolgreiche Durchführen des erfindungsgemäßen Verfahrens hingegen wenig kritisch, jedoch sind große Mengen auch nicht vorteilhaft, da man sie danach wieder aus der Reaktionsmatrix entfernen muss.

In diesem Zusammenhang und dem kristallinen Habit der erfindungsgemäß besonders bevorzugt eingesetzten Trichloressigsäure geschuldet, sind in der industriellen Praxis naturgemäß alle die Verfahrensvarianten vorzuziehen, die es gestatten, den Kondensationskatalysator in Form einer Lösung und nicht als Feststoff und das besonders bevorzugt zusammen mit dem Puffergemisch in das Reaktionssystem einzubringen.

Die Eventualität des Auftretens von Verfärbungen steht auch mit den Temperaturen in Zusammenhang, denen das Reaktionsgemisch ausgesetzt wird, so dass sich hieraus mehrere bevorzugte Ausgestaltungen des erfindungsgemäßen Prozesses ergeben.

Eine weitere bevorzugte Ausführungsform sieht vor, dass man das trifluormethansulfonsaure, äquilibrierte α,ω-Diacetoxypolydimethylsiloxan mit Polyethermonool(en) bei Temperaturen von < 25°C unter Rühren vorlegt, und durch ein darauf folgendes Eintragen eines Puffergemisches und gegebenenfalls einem zusätzlichen Kondensationskatalysator vor Erwärmen des Reaktionsgemisches einer unerwünschten Verfärbung des Reaktionsproduktes wirkungsvoll begegnet.

Bei einer erfindungsgemäß besonders bevorzugten Ausführungsform sieht man vor, in dem zur Verknüpfung vorgesehenen Polyetherol respektive Polyetherolgemisch bereits unter Rühren Puffergemische vorzulegen, bevor man das trifluormethansulfonsaure, äquilibrierte α,ω-Diacetoxypolydimethylsiloxan hinzufügt (vgl. insbesondere die Beispiele 2 und 3). Durch das gegebenenfalls weitere Hinzufügen von Kondensationskatalysatoren wie zum Beispiel bevorzugt Trichloressigsäure wird eine zügige Umsetzung der Reaktanden gewährleistet. Diese Reaktion wird vorzugsweise bei Temperaturen zwischen 50 bis 90°C und vorzugsweise über die Dauer von 2 bis 6 Stunden durchgeführt.

Die Vermeidung unerwünschter Verfärbungen im Polyethersiloxan stellt insbesondere bei denjenigen Reaktandsystemen eine große Herausforderung dar, die zu SiOC-verknüpften, ABA-strukturierten Polyethersiloxanen führen und ungesättigte Gruppierungen (z.B. Allyloxy-Endgruppen) in den Polyetherkomponenten aufweisen. Diese speziellen Polyethersiloxane haben mit ihren zum Teil vorzüglichen Pigmentaffinitäten eine herausragende Bedeutung als Additive in Farb- und Lackformulierungen.

Wie ein Vergleichsexperiment (Beispiel 4) belegt, kann eine nichterfindungsgemäße Umsetzung des trifluormethansulfonsauren α,ω-Diacetoxypolydimethylsiloxans zu stark dunkelbraun gefärbten Produkten führen.

Überraschenderweise wurde darüber hinaus gefunden, dass die erfindungsgemäß hergestellten Polyethersiloxane eine vorzügliche Lagerstabilität besitzen. Als Kriterium zur Bewertung der Lagerstabilität der im Rahmen der erfinderischen Lehre hergestellten SiOC-verknüpften Polyethersiloxane wird bei konstant gewählter Lagertemperatur durch Probenahme die Viskosität als Funktion der Zeit verfolgt, da sich hierin mögliche Abbau- und/oder Aufbauprozesse empfindlich manifestieren.

Erfindungsgemäß kommen vorzugsweise Kondensationskatalysatoren zum Einsatz. Insbesondere sind alle Brönstedt-Säuren, hierbei bevorzugt die einfachen Mineralsäuren sowie Methansulfonsäure, Phosphorsäure, Phosphonsäuren und/oder auch sauren salzartigen Verbindungen wie Triflatsalze, insbesondere Bismuttriflat und/oder alle Lewis-sauren Verbindungen wie Zinn- und Organozinnverbindungen, Titanatester, Tetraalkoxytitanate, Zinkacetylacetonat, Zinkacetat und Trispentafluorphenylboran befähigt, die Umsetzung des Acetoxysiloxans mit Polyethermonoolen zu katalysieren. Ganz besonders bevorzugt wird Trichloressigsäure als Kondensationskatalysator eingesetzt. Der entsprechende Einsatz von Kondensationskatalysatoren, insbesondere Trichloressigsäure, entspricht einer besonders bevorzugten Ausführungsform der Erfindung.

Ein weiterer Gegenstand und eine weitere bevorzugte Ausführungsform dieser Erfindung ist der salzfreie Austausch von Acetoxygruppen, die an lineare Siloxane gebunden sind, durch Polyetheroxyreste, indem man das trifluormethansulfonsaure Acetoxygruppen tragende, lineare Siloxan in Gegenwart von Puffergemischen und gegebenenfalls einem zusätzlichen Kondensationskatalysator sowie gegebenenfalls in einem inerten Lösungsmittel zusammen mit dem Polyetherol unter Rühren zur Reaktion bringt und dann im Rahmen einer Destillation die entstandene Essigsäure und Reste eingesetzten Acetanhydrids gegebenenfalls zusammen mit Anteilen des eingesetzten Lösungsmittels entfernt. Dies entspricht einer bevorzugten Ausführungsform der Erfindung zum Austausch der Siloxan gebundenen Acetoxygruppen durch die Umsetzung mit Polyetherolen (vgl. auch Beispiele 2 und 3).

Bevorzugt sind dabei solche Lösungsmittel, die im Sinne der angestrebten Substitutionsreaktion (Austausch Acetoxy- vs. Polyetheroxy-Rest) inert sind und in bevorzugter Weise mit der entstehenden Essigsäure ein thermisch abtrennbares Azeotrop bilden. Dies entspricht einer weiteren bevorzugten Ausführungsform der Erfindung, wobei der Einsatz eines aromatischen, vorzugsweise alkylaromatischen Lösungsmittels bevorzugt ist.

Unter den mit Essigsäure binäre Azeotrope bildenden Lösungsmitteln ist Toluol ganz besonders bevorzugt. Der Einsatz von Toluol entspricht daher einer bevorzugten Ausführungsform der Erfindung. Die Siedepunkte von Toluol und Essigsäure sind mit 110,6 bzw. 118,5°C und der Siedepunkt des binären Azeotrops mit 105,4°C angegeben. Das Azeotrop besitzt eine Zusammensetzung von 72 Gewichtsprozent Toluol und 28 Gewichtsprozent Essigsäure (Quelle: Handbook of Chemistry and Physics, 58th Edition, Seite D2, CRC-Press (1977-1978), West Palm Beach). Üblicherweise kann hierzu ein technisches Toluol ohne weitere Vortrocknung eingesetzt werden, das einen Wassergehalt von 0,03 Massenprozent besitzt (Wassergehaltsbestimmung nach der Karl-Fischer-Methode in Anlehnung an DIN 51777, DGF E-III 10 und DGF C-III 13a).

Das mit der Azeotropbildung einhergehende, thermische Auskreisen der Essigsäure stellt den vollständigen Austausch der am Siloxangerüst gebundenen Acetoxyfunktionen gegen Polyetheroxyreste sicher und entspricht daher eines besonders bevorzugten Ausführungsform der Erfindung.

Ganz besonders bevorzugt ist hierbei außerdem das Anlegen eines Hilfsvakuums, da es die thermische Belastung des entstandenen SiOC-verknüpften, linearen Polyethersiloxans minimiert (vgl. Beispiele 2 und 3). Dies entspricht einer weiteren bevorzugten Ausführungsform der Erfindung.

Erstaunlicherweise wurde jedoch auch gefunden, dass die lösemittelfreie Transformation trifluormethansulfonsaurer linearer, Acetoxyfunktionen aufweisender Siloxane zu linearen SiOC-verknüpften Polyethersiloxanen sehr zügig (innerhalb von 3 Stunden) und überdies bei sehr moderaten Temperaturen (T = 70°C) quantitativ gelingt (vgl. Beispiel 2 und 3).

Wenn der Austausch der Siloxan gebundenen Acetoxygruppen durch die Umsetzung mit Polyethermonoolen lösemittelfrei erfolgt, so liegt demgemäß eine weitere bevorzugte Ausführungsform der Erfindung vor.

Zur Einführung der Acetoxygruppen wird Trifluormethansulfonsäure bevorzugt in Konzentrationen von 0,1 bis 0,3 Gewichtsprozent (w-%) bezogen auf die Gesamtmasse des Reaktionsansatzes eingesetzt. Dies entspricht einer besonders bevorzugten Ausführungsform der Erfindung.

Erfindungsgemäß kann man nach der destillativen Abtrennung entstandener und der im System gegebenenfalls vorhandenen Essigsäure und das sowohl in den Lösemittel-verwendenden als auch in den Lösemittel-freien Fällen optional das im Destillationssumpf verbleibende, SiOC-verknüpfte Polyethersiloxan vorzugsweise durch das Hinzufügen einer Hilfsbase wie zum Beispiel Natriumcarbonat und anschließende Filtration vollkommen von Spuren restlicher Säure befreien (vgl. Beispiele 2 und 3). Dies entspricht einer weiteren bevorzugten Ausführungsform der Erfindung

Zur Sicherstellung erhöhter Lagerstabilität können die nach dem erfindungsgemäßen Verfahren hergestellten linearen Polyethersiloxane zudem noch mit kleinen Mengen organischer Amine, wie zum Beispiel N-Methylmorpholin versetzt werden. Dies entspricht einer bevorzugten Ausführungsform der Erfindung.

Im abschließenden Schritt des erfindungsgemäßen Verfahrens wird der Austausch der Acetoxygruppen durch die Umsetzung des trifluormethansulfonsauren Acetoxysiloxans mit Polyethermonoolen vorgenommen.

Hierbei sind die erfindungsgemäß einsetzbaren Polyethermonoole vorzugsweise solche der Formel (I)

A[-O-(CH₂-CHR'-O-)ₘ-(CH₂-CH₂-O-)ₙ--(CH₂-CH(CH₃)-O-)ₒ-Z]ₐ (I)

mit
A ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung, besonders bevorzugt ein linearer oder verzweigter gesättigter oder ungesättigter Kohlenwasserstoffrest mit 1-18 C-Atomen, bevorzugt eine Methyl-, Ethyl-, Propyl-, Butyl-, Vinyl- oder Allylgruppe ist,
R' unabhängig voneinander eine gesättigte Alkylgruppe mit 2-18 C-Atomen ist oder ein aromatischer Rest, respektive bevorzugt eine Ethylgruppe oder ein Phenylrest,
Z Wasserstoff,
m gleich 0 bis zu 50, bevorzugt 0 bis zu 30, besonders bevorzugt 0 bis zu 20 ist
n gleich 0 bis zu 250, bevorzugt 3 bis zu 220, besonders bevorzugt 5 bis zu 200 ist
o gleich 0 bis zu 250, bevorzugt 3 bis zu 220, besonders bevorzugt 5 bis zu 200 ist
a gleich 1
mit der Maßgabe, dass die Summe aus m, n und o gleich oder größer als 1 ist. Dies entspricht einer bevorzugten Ausführungsform der Erfindung.

Vorzugsweise werden Verbindungen der Formel (I) verwendet, die ausschließlich Wasserstoffatome, Sauerstoffatome und Kohlenstoffatome aufweisen.

Die hier wiedergegebenen Indexzahlen und die Wertbereiche der angegebenen Indizes können als Mittelwerte (Gewichtsmittel) der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (I).

Die mit m, n und o bezeichneten Einheiten können wahlweise statistisch gemischt oder auch blockweise in der Kette enthalten sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Unter dem Rest A werden im Rahmen der vorliegenden Erfindung vorzugsweise Reste von Substanzen verstanden, die den Anfang der herzustellenden Verbindung der Formeln (I) bilden, die durch die Anlagerung von Alkylenoxiden erhalten wird. Die Startverbindung ist vorzugsweise ausgewählt aus der Gruppe der Alkohole, Polyetherole oder Phenole. Bevorzugt wird als Startverbindung enthaltend die Gruppe A ein einwertiger Polyetheralkohol und/oder ein einwertiger Alkohol, oder deren beliebige Mischungen verwendet.

Als Monomere in der Alkoxylierungsreaktion werden bevorzugt Ethylenoxid, Propylenoxid, Butylenoxid und/oder Styroloxid eingesetzt sowie beliebige Mischungen dieser Epoxide. Die unterschiedlichen Monomere können in reiner Form oder gemischt eingesetzt werden. Auch kann die Dosierung eines weiteren Epoxides zu einem bereits in der Reaktionsmischung vorliegenden Epoxides kontinuierlich über die Zeit erfolgen, so dass ein zunehmender Konzentrationsgradient des kontinuierlich zugegebenen Epoxides entsteht. Die entstehenden Polyoxyalkylene unterliegen damit einer statistischen Verteilung im Endprodukt, wobei Beschränkungen durch die Dosierung bestimmt werden können. Im hier genannten Fall der kontinuierlichen Zugabe eines weiteren Epoxides zu einem bereits in der Reaktionsmischung vorliegenden Epoxides ist dann über die Kettenlänge ein Strukturgradient zu erwarten. Die Zusammenhänge zwischen Dosierung und Produktstruktur sind dem Fachmann bekannt.

Bevorzugt werden in dem erfindungsgemäßen Verfahren als Verbindungen der Formel (I) solche eingesetzt, die eine gewichtsmittlere Molmasse von 76 bis 10.000 g/mol, bevorzugt von 100 bis 8.000 g/mol und besonders bevorzugt von 200 bis 6.000 g/mol aufweisen.

Als Verbindungen der Formel (I) können bevorzugt solche Verbindungen eingesetzt werden, die aus einer Verbindung der Formel (II)

A[-OH]a (II)

hervorgegangen sind, wobei der Rest A sich aus Verbindungen ableitet ausgewählt aus der Gruppe der einrwertigen monomeren, oligomeren oder polymeren Alkohole, Phenole, Kohlenhydrate oder Kohlenhydratderivate, wobei besonders bevorzugt solche Verbindungen eingesetzt werden, bei denen sich der Rest A von einem oder mehreren Alkoholen aus der Gruppe von Butanol, 1-Hexenol, Octanol, Dodecanol, Stearylalkohol, Vinyloxybutanol, 2-Ethylhexanol, Cyclohexanol, Benzylalkohol, Allylalkohol, Vinylalkohol oder von auf Naturstoffen basierenden, einwertigen Hydroxylgruppen tragenden Verbindungen ableitet.

Besonders bevorzugt werden solche Verbindungen eingesetzt, die bei einem Druck von 101325 Pa und einer Temperatur von 23 °C flüssig vorliegen.

Erfindungsgemäß als Polyetherole einsetzbare Verbindungen der Formel (I) und Verfahren zu deren Herstellung werden z. B. in EP0075703, US3775452 und EP1031603 beschrieben. Geeignete Verfahren bedienen sich z.B. basischer Katalysatoren wie z.B. der Alkalihydroxide und der Alkalimethylate. Besonders verbreitet und seit vielen Jahren bekannt ist der Einsatz von KOH. Typischerweise wird ein meist niedermolekularer, dass bedeutet, mit einem Molekulargewicht von kleiner als 200 g/mol, hydroxyfunktioneller Starter wie Butanol, Allylalkohol, Propylenglykol in Gegenwart des alkalischen Katalysators mit einem Alkylenoxid wie Ethylenoxid, Propylenoxid, Butylenoxid oder einem Gemisch verschiedener Alkylenoxide zu einem Polyoxyalkylenpolyether umgesetzt. Die stark alkalischen Reaktionsbedingungen bei dieser sogenannten Living-Polymerisation fördern verschiedene Nebenreaktionen. Die Verbindungen der Formeln (II) können auch durch Doppelmetallcyanid-Katalyse hergestellt werden. Durch Doppelmetallcyanid-Katalyse hergestellte Polyether haben in der Regel einen besonders niedrigen Gehalt an ungesättigten Endgruppen von kleiner oder gleich 0,02 Milliäquivalenten pro Gramm Polyether-Verbindung (meq/g), bevorzugt kleiner oder gleich 0,015 meq/g, besonders bevorzugt kleiner oder gleich 0,01 meq/g (Bestimmungsmethode ASTM D2849-69 ), enthalten deutlich weniger Monole und haben in der Regel eine geringe Polydispersität von weniger als 1,5. Die Polydispersität (PD) kann nach einer dem Fachmann an sich bekannten Methode ermittelt werden, indem durch Gelpermeationschromatographie (GPC) sowohl das zahlenmittlere Molekulargewicht (Mn) wie auch das gewichtsmittlere Molekulargewicht (Mw) bestimmt werden. Die Polydispersität ergibt sich als PD = Mw/Mn. Die Herstellung derartiger Polyether wird z. B. in der US-A5158922 und der EP-A0654302 beschrieben.

Unabhängig vom Herstellungsweg sind Verbindungen der Formel (I) bevorzugt geeignet, die vorzugsweise eine Polydispersität Mw/Mn von 1,0 bis 1,5 aufweisen, bevorzugt mit einer Polydispersität von 1,0 bis 1,3.

Abhängig vom Alkylenoxid-Terminus können die erfindungsgemäß einzusetzenden Polyethermonoole eine primäre oder sekundäre OH-Funktion besitzen. Unter dem Aspekt der später erzielten hydrolytischen Beständigkeit der gewonnenen SiOC-verknüpften Polyethersiloxane ist im Rahmen der erfinderischen Lehre der Einsatz von solchen Polyethermonoolen bevorzugt, die eine sekundäre Alkoholfunktion aufweisen.

Der erfindungsgemäße Austausch der am α,ω-Diacetoxypolydimethylsiloxan gebundenen Acetoxygruppen durch Umsetzung mit Polyethermonoolen zu SiOC verknüpften, linearen Polyethersiloxanen kann in Gegenwart von Lösungsmitteln oder bevorzugt ohne Lösungsmittel durch innige Vermischung der Reaktanden unter Rühren bei Umsetzungstemperaturen von 20°C bis 90°C, bevorzugt bei Umsetzungstemperaturen von 30°C bis 80°C erfolgen. Dies entspricht einer bevorzugten Ausführungsform der Erfindung.

Das molare Verhältnis der Reaktanden wird dabei vorzugsweise so bemessen, dass man mindestens 1 Mol an Polyether gebundene OH-Funktionalität pro Mol Acetoxygruppe des α,ω-Diacetoxy-polydimethylsiloxans, bevorzugt 1 bis 2 Mol an Polyether gebundene OH-Funktionalität, besonders bevorzugt 1,1 bis 1,6 Mol an Polyether gebundene OH-Funktionalität, vorzugsweise 1,1 bis 1,4 Mol an Polyether gebundene OH-Funktionalität pro Mol Acetoxygruppe des α,ω-Diacetoxypolydimethylsiloxans einsetzt. Dies entspricht einer bevorzugten Ausführungsform der Erfindung.

Die in einer Vielzahl von grenzflächenaktiven Anwendungen eigesetzten SiOC-verknüpften, verzweigten Polyethersiloxane sind häufig davon geprägt, dass sie Polyetherreste unterschiedlicher Zusammensetzung und/ oder Molekulargewichts enthalten. Somit entspricht es einer bevorzugten Ausführungsform des erfindungsgemäßen Verfahrens, das Acetoxygruppen enthaltende, äquilibrierte lineare Siloxan mit einer Mischung verschiedenartiger Polyetherole umzusetzen. Dem Fachmann vertraut ist das zum Teil unterschiedliche Reaktionsverhalten der eingesetzten Polyetherole, so dass man dem Ziel gewidmet eine besondere Grenzflächenaktivität hervorzurufen, einige orientierende Handversuche mit Polyetherol-Mischungen macht und diese so erhaltenen Produkte dann jeweils anwendungstechnisch bewertet, um ein optimales Ergebnis zu erzielen.

Der Austausch der Acetoxygruppen durch Umsetzung mit Polyetherolen erfolgt erfindungsgemäß vorzugsweise im Verlauf von 30 Minuten bis 8 Stunden. Dies entspricht einer bevorzugten Ausführungsform der Erfindung.

Ein weiterer Gegenstand der Erfindung ist die Verwendung dieser Zubereitung, hergestellt nach dem erfindungsgemäßen Verfahren wie zuvor beschrieben, als tensidisches Additiv in nichtkorrosiven Reinigungslösungen, als Entschäumer, als Schaumstabilisatoren, Netzmittel, Lack- und Verlaufsadditive sowie als Dismulgatoren.

### Beispiele

Die folgenden Beispiele dienen dem Fachmann allein zur Erläuterung dieser Erfindung und stellen keinerlei Beschränkung des beanspruchten Gegenstandes dar. Die erfindungsgemäße Bestimmung der Wassergehalte erfolgt grundsätzlich mit der Karl-Fischer-Methode in Anlehnung an DIN 51777, DGF E-III 10 und DGF C-III 13a. Die ²⁹Si-NMR-Spektroskopie diente in allen Beispielen der Reaktionsverfolgung.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [δ(²⁹Si) = 0,0 ppm] gemessen.

Die GPC's (Gel-Permeations-Chromatographie) werden unter Verwendung von THF als mobiler Phase an einer Säulenkombination SDV 1000/10000A, Länge 65 cm, ID 0,80 bei einer Temperatur von 30°C an einem SECcurity² GPC System 1260 (PSS Polymer Standards Service GmbH) aufgenommen.

Die Gaschromatogramme werden an einem GC-Gerät des Typs GC 7890B der Fa. Agilent Technologies ausgestattet mit einer Säule vom Typ HP-1; 30m x 0,32mm ID x 0,25µm dF (Agilent Technologies Nr. 19091Z-413E) und Wasserstoff als Trägergas mit folgenden Parametern aufgenommen:
Detektor: FID; 310°C
Injektor: Split; 290°C
Mode: constant flow 2 mL/min
Temperaturprogramm: 60°C mit 8°C/min -150°C mit 40°C/min - 300°C 10 min.

Als Indikator für das Erreichen des Äquilibriergleichgewichtes wird der gaschromatographisch bestimmte Gesamtcylengehalt definiert als die Summe der D4-, D5-, D6-Gehalte bezogen auf die Siloxanmatrix und festgestellt nach der Derivatisierung der α,ω-Diacetoxypolydimethylsiloxane zu den entsprechenden α,ω-Diisopropoxypolydimethylsiloxanen herangezogen. Die Derivatisierung zu den α,ω-Diisopropoxypolydimethylsiloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxy-polydimethylsiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Die argentometrische Titration zur Bestimmung des Gesamtchloridgehalts im ppm-Bereich wird mit Hilfe eines Metrohm Titroprozessors 736/751 ausgerüstet mit einer kombinierten Silber/Metallelektrode (z.B. Metrohm Art.Nr. 6.0418.100) unter Verwendung einer Silbernitrat-Lösung c(AgNO3) = 0.01 mol/l (z.B. Fluka Fixanal Art.Nr. 38310) durchgeführt.

Die eingesetzten Polyethermonoole besitzen Wassergehalte von ca. 0,2 Massenprozent und werden ohne weitere Vortrocknung verwendet.

Zur Absicherung der insbesondere produktionslogistisch wichtigen Lagerstabilität werden die erfindungsgemäß hergestellten Acetoxysiloxane falls in den jeweiligen Synthesebeispielen nicht explizit anders beschrieben, zunächst bei 23°C Lagertemperatur über einen Zeitraum von 3 Wochen in Glasflaschen gelagert, bevor sie mit den Polyetherolen zu den entsprechenden SiOC-verknüpften, linearen Polydimethylsiloxan-Polyoxyalkylen-Blockcopolymeren beziehungsweise zu den entsprechenden α,ω-Diisopropoxypolydimethylsiloxanen umgesetzt werden.

### Beispiel 1 (nicht erfindungsgemäß)

### Herstellung eines Acetoxy-terminierten, linearen Polydimethylsiloxans

In einem 500-ml-Vierhalskolben mit KPG-Rührer, Innenthermometer und aufgesetztem Rückflusskühler werden 19,3 g (0,189 mol) Essigsäureanhydrid zusammen mit 183,2 g (0,494 mol) Dekamethylcyclopentasiloxan (D₅) unter Rühren vorgelegt und mit 0,2 g (0,12 ml) Trifluormethansulfonsäure (0,1 Massenprozent bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 80% bezogen auf eingesetztes Essigsäureanhydrid belegt entsprechend einem α,ω-Diacetoxypolydimethylsiloxan mit einer mittleren Gesamtkettenlänge von ca. 16.

### Beispiel 2 (nicht erfindungsgemäß)

### Herstellung eines SiOC-verknüpften, linearen Polydimethylsiloxan-Polyoxyalkylen-Blockcopolymers des Strukturtyps ABA mit Allyloxy-Termini (lösemittelfrei)

In einem 500-ml-Vierhalskolben mit KPG-Rührer, Innenthermometer und aufgesetztem Rückflusskühler werden 104,0 g eines Allylalkohol-gestarteten Polypropylenoxy(polyethylenoxy)gruppen enthaltenden Polyetherols mit 80% Propylenoxid-Anteil der mittleren Molmasse 757 g/ mol (bestimmt nach OH-Zahl) unter Rühren vorgelegt. Dann wird eine Pufferlösung bestehend aus 0,32 g Natriumtrichloracetat (224 Val-%-Überschuß bezogen auf die im Acetoxysilan vorhandene Trifluormethansulfonsäure), 0,37 g Trichloressigsäure (0,2% bezogen auf die Reaktionsmischung bestehend aus Polyetherol und Acetoxysiloxan) gelöst in 5 g Essigsäure hinzugegeben. Dann werden 80,0 g eines gemäß Beispiel 1 hergestellten, Acetoxy-terminierten, linearen Siloxans hinzugegeben. Man erhitzt den Reaktionsansatz unter weiterem Rühren auf 70°C und hält diese Umsetzungstemperatur für 3 Stunden.

Der Rückflusskühler wird durch eine Destillationsbrücke ersetzt und man destilliert bei 70°C und einem angelegten Hilfsvakuum von < 1mbar die Flüchtigen ab.

Nach Brechen des Vakuums wird der Destillationssumpf in der Wärme mit 3,68 g Natriumcarbonat Na₂CO₃ versetzt und man lässt den Ansatz 2 Stunden bei 70°C weiterrühren. Nach Abkühlen auf 23°C wird der Feststoff mit Hilfe einer Filterpresse (Filterscheibe Seitz K 300) abgetrennt.

Isoliert wird ein farblos, klares Polyethersiloxan dessen zugehöriges ²⁹Si-NMR-Spektrum die angestrebte Struktur belegt.

### Beispiel 3 (nicht erfindungsgemäß)

### Herstellung eines SiOC-verknüpften, linearen Polydimethylsiloxan-Polyoxyalkylen-Blockcopolymers des Strukturtyps ABA mit Allyloxy-Termini (lösemittelfrei)

In einem 500-ml-Vierhalskolben mit KPG-Rührer, Innenthermometer und aufgesetztem Rückflusskühler werden 104,0 g eines Allylalkohol-gestarteten Polypropylenoxy(polyethylenoxy)gruppen enthaltenden Polyetherols mit 80% Propylenoxid-Anteil der mittleren Molmasse 757 g/ mol (bestimmt nach OH-Zahl) unter Rühren vorgelegt. Dann wird eine Pufferlösung bestehend aus 0,16 g Natriumacetat (266 Val-%-Überschuß bezogen auf die im Acetoxysilan vorhandene Trifluormethansulfonsäure), 0,37 g Trichloressigsäure (0,2% bezogen auf die Reaktionsmischung bestehend aus Polyetherol und Acetoxysiloxan) gelöst in 5 g Essigsäure hinzugegeben. Dann werden 80,0 g eines gemäß Beispiel 1 hergestellten, Acetoxy-terminierten, linearen Siloxans hinzugegeben. Man erhitzt den Reaktionsansatz unter weiterem Rühren auf 70°C und hält diese Umsetzungstemperatur für 3 Stunden.

Der Rückflusskühler wird durch eine Destillationsbrücke ersetzt und man destilliert bei 70°C und einem angelegten Hilfsvakuum von < 1mbar die Flüchtigen ab.

Nach Brechen des Vakuums wird der Destillationssumpf in der Wärme mit 3,68 g Natriumcarbonat Na₂CO₃ versetzt und man lässt den Ansatz 2 Stunden bei 70°C weiterrühren. Nach Abkühlen auf 23°C wird der Feststoff mit Hilfe einer Filterpresse (Filterscheibe Seitz K 300) abgetrennt.

Isoliert wird ein farblos, klares Polyethersiloxan dessen zugehöriges ²⁹Si-NMR-Spektrum die angestrebte Struktur belegt.

### Beispiel 4 (nicht erfindungsgemäß)

### Herstellung eines SiOC-verknüpften, linearen Polydimethylsiloxan-Polyoxyalkylen-Blockcopolymers des Strukturtyps ABA mit Allyloxy-Termini (lösemittelfrei)

In einem 500-ml-Vierhalskolben mit KPG-Rührer, Innenthermometer und aufgesetztem Rückflusskühler werden 104,0 g eines Allylalkohol-gestarteten Polypropylenoxy(polyethylenoxy)gruppen enthaltenden Polyetherols mit 80% Propylenoxid-Anteil der mittleren Molmasse 757 g/ mol (bestimmt nach OH-Zahl) unter Rühren vorgelegt. Dann werden 80,0 g eines gemäß Beispiel 1 hergestellten, Acetoxy-terminierten, linearen Siloxans hinzugegeben. Man erhitzt den Reaktionsansatz unter weiterem Rühren auf 70°C und hält diese Umsetzungstemperatur für 3 Stunden. Während der Aufheizphase erfährt der Ansatz bereits eine signifikante Braun-Schwarz-Verfärbung.

Der Rückflusskühler wird durch eine Destillationsbrücke ersetzt und man destilliert bei 70°C und einem angelegten Hilfsvakuum von < 1mbar die Flüchtigen ab.

Nach Brechen des Vakuums wird der Destillationssumpf in der Wärme mit 3,68 g Natriumcarbonat Na₂CO₃ versetzt und man lässt den Ansatz 2 Stunden bei 70°C weiterrühren. Nach Abkühlen auf 23°C wird der Feststoff mit Hilfe einer Filterpresse (Filterscheibe Seitz K 300) abgetrennt.

Isoliert wird ein stark dunkelbraun gefärbtes, klares Polyethersiloxan dessen zugehöriges ²⁹Si-NMR-Spektrum die angestrebte Struktur belegt.

### Beispiel 5 (erfindungsgemäß)

### Herstellung eines Acetoxy-terminierten, linearen Polydimethylsiloxans

In einem 1000-ml-Vierhalskolben mit KPG-Rührer, Innenthermometer und aufgesetztem Rückflusskühler werden 77,3 g (0,757 mol) Essigsäureanhydrid zusammen mit 732,8 g (1,98 mol) Dekamethylcyclopentasiloxan (D₅) und 12,2 g Essigsäure (1,5 Gew.-% bezogen auf die Gesamtmasse der Reaktanden) unter Rühren vorgelegt und mit 1,62 g (0,88 ml) Trifluormethansulfonsäure (0,2 Massenprozent bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 93% bezogen auf eingesetztes Essigsäureanhydrid belegt entsprechend einem α,ω-Diacetoxypolydimethylsiloxan mit einer mittleren Gesamtkettenlänge von ca. 14.

### Überführung des α,ω-Diacetoxypolydimethylsiloxans in das entsprechende α,ω-Diisopropoxypolydimethylsiloxan zur analytischen Charakterisierung

Unmittelbar nach der Synthese werden 50,0 g dieses trifluormethansulfonsauren, äquilibrierten α,ω-Diacetoxypolydimethylsiloxans in einem 250-ml-Vierhalsrundkolben ausgerüstet mit mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes ²⁹Si-NMR-Spektrum die quantitative Umwandlung des α,ω-Diacetoxypolydimethylsiloxans in ein α,ω-Diisopropoxypolydimethylsiloxan belegt.

Ein Aliquot dieses α,ω-Diisopropoxypolydimethylsiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt |
|---|---|---|---|---|
| 4,94 % | 4,04 % | 1,07 % | 10,06 % | 11,00 % |

Unter Berücksichtigung des Isopropanolüberschusses sind hierbei die Gehalte an Siloxancyclen (D₄, D₅ und D₆) allein bezogen auf den Siloxananteil berechnet.

### Beispiel 6 (erfindungsgemäß)

### Herstellung eines Acetoxy-terminierten, linearen Polydimethylsiloxans

In einem 1000-ml-Vierhalskolben mit KPG-Rührer, Innenthermometer und aufgesetztem Rückflusskühler werden 77,3 g (0,757 mol) Essigsäureanhydrid zusammen mit 732,8 g (1,98 mol) Dekamethylcyclopentasiloxan (D₅) und 24,3 g Essigsäure (3,0 Gew.-% bezogen auf die Gesamtmasse der Reaktanden) unter Rühren vorgelegt und mit 1,62 g (0,88 ml) Trifluormethansulfonsäure (0,2 Massenprozent bezogen auf den Gesamtansatz) versetzt und zügig auf 150°C erhitzt. Die zu Beginn leicht trübe Reaktionsmischung wird unter weiterem Rühren für 4 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 93% bezogen auf eingesetztes Essigsäureanhydrid belegt entsprechend einem α,ω-Diacetoxypolydimethylsiloxan mit einer mittleren Gesamtkettenlänge von ca. 14.

### Überführung des α,ω-Diacetoxypolydimethylsiloxans in das entsprechende α,ω-Diisopropoxypolydimethylsiloxan zur analytischen Charakterisierung

Unmittelbar nach der Synthese werden 50,0 g dieses trifluormethansulfonsauren, äquilibrierten α,ω-Diacetoxypolydimethylsiloxans in einem 250-ml-Vierhalsrundkolben ausgerüstet mit mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes ²⁹Si-NMR-Spektrum die quantitative Umwandlung des α,ω-Diacetoxypolydimethylsiloxans in ein α,ω-Diisopropoxypolydimethylsiloxan belegt.

Ein Aliquot dieses α,ω-Diisopropoxypolydimethylsiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt |
|---|---|---|---|---|
| 4,09 % | 2,62 % | 0,86 % | 7,57 % | 4,60 % |

Unter Berücksichtigung des Isopropanolüberschusses sind hierbei die Gehalte an Siloxancyclen (D₄, D₅ und D₆) allein bezogen auf den Siloxananteil berechnet.

## Patentansprüche

1. Verfahren zur Herstellung von SiOC-verknüpften, linearen Polydimethylsiloxan-Polyoxyalkylen-Blockcopolymeren des Strukturtyps ABA, **dadurch gekennzeichnet, dass** man trifluormethansulfonsaures, äquilibriertes α,ω-Diacetoxypolydimethylsiloxan mit Polyethermonoolen in Gegenwart von Puffergemischen und gegebenenfalls einem zusätzlichen Kondensationskatalysator sowie gegebenenfalls in Gegenwart eines inerten Lösungsmittels umsetzt, wobei das trifluormethansulfonsaure, äquilibrierte α,ω-Diacetoxy-polydimethylsiloxan der allgemeinen Formel 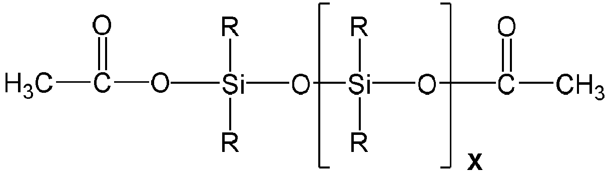 mit
R = Methyl, genügt und eine mittlere mit ²⁹Si-NMR-Spektroskopie bestimmte Kettenlänge von 0 ≤ X ≤ 250, bevorzugt 5 ≤ X ≤ 100, besonders bevorzugt 10 ≤ X ≤ 30 aufweist sowie 0,1 bis 0,3 Massenprozent Trifluormethansulfonsäure, und 5 bis 43 Val-%, bevorzugt 11 bis 25 Val-% freien Acetanhydrids, bezogen auf das im α,ω-Diacetoxypolydimethylsiloxan chemisch gebundene Acetanhydrid-Äquivalent, enthält, und erhältlich ist durch ein Verfahren zur Herstellung trifluormethansulfonsaurer äquilibrierter α,ω-Diacetoxypolydimethylsiloxane, bei dem man zyklische Siloxane, insbesondere umfassend D₄ und/oder D₅, unter Einsatz von Trifluormethansulfonsäure als Katalysator mit Acetanhydrid, unter Zusatz von Essigsäure, umsetzt.

2. Verfahren nach Anspruch 1, **dadurch gekennzeichnet, dass** die Menge der zur Beaufschlagung des Polyethermonools eingesetzten Base im Puffergemisch so bemessen wird, dass sie mindestens dem stöchiometrischen Äquivalent, bevorzugt mindestens dem 2-fachen stöchiometrischen Äquivalent der im α,ω-Diacetoxypolydimethylsiloxan enthaltenen Trifluormethansulfonsäure entspricht.

3. Verfahren nach einem der Ansprüche 1 oder 2, **dadurch gekennzeichnet, dass** man das Polyethermonool zunächst gegebenenfalls in Gegenwart eines inerten Lösungsmittels mit Puffergemischen und gegebenenfalls einem zusätzlichen α,ω-Diacetoxypolydimethylsiloxan, versetzt, und dann die freigesetzte und die im System gegebenenfalls vorhandene Essigsäure gegebenenfalls unter Nutzung eines Azeotrop- bildenden Lösungsmittels zusammen mit dem Lösungsmittel thermisch abtrennt und das erhaltene SiOC-verknüpfte, lineare Polydimethylsiloxan-Polyoxyalkylen-Blockcopolymer durch das Hinzufügen einer Hilfsbase neutralisiert, filtriert und gegebenenfalls endstabilisiert.

4. Verfahren nach einem der Ansprüche 1 bis 3, **dadurch gekennzeichnet, dass** ein Kondensationskatalysator zur Umsetzung des äquilibrierten α,ω-Diacetoxypolydimethylsiloxans mit Polyethermonoolen eingesetzt wird, wobei als Kondensationskatalysator Brönstedt-Säuren, hierbei bevorzugt die einfachen Mineralsäuren sowie Methansulfonsäure, Phosphorsäure, Phosphonsäuren und/oder auch sauren salzartigen Verbindungen wie Triflatsalze, insbesondere Bismuttriflat und/oder Lewis-sauren Verbindungen wie Zinn- und Organozinnverbindungen, Titanatester, Tetraalkoxytitanate, Zinkacetylacetonat, Zinkacetat, Trispentafluorphenylboran und ganz besonders bevorzugt Trichloressigsäure eingesetzt werden, wobei der Kondensationskatalysator, insbesondere die Trichloressigsäure, im Bereich von 0,1 bis 0,7 Massenprozent, bevorzugt zwischen 0,2 bis 0,5 Massenprozent bezogen auf die Gesamtmenge der für die SiOC-Verknüpfungsreaktion vorgesehenen Reaktanden, nämlich α,ω-Diacetoxypolydimethylsiloxan und Polyethermonool, eingesetzt wird.

5. Verfahren nach einem der Ansprüche 1 bis 4, **dadurch gekennzeichnet, dass** die verwendeten Puffergemische zumindest Anteile des Kondensationskatalysators und hierbei besonders bevorzugt den Kondensationskatalysator in Form eines Salzes enthalten.

6. Verfahren nach einem der Ansprüche 1 bis 5, **dadurch gekennzeichnet, dass** die Puffergemische Natriumtrichloracetat und Essigsäure oder Natriumacetat und Essigsäure umfassen.

7. Verfahren nach einem der Ansprüche 1 bis 6, **dadurch gekennzeichnet, dass** als Lösungsmittel aromatische, vorzugsweise alkylaromatische Lösungsmittel, dabei vorzugsweise solche die mit Essigsäure ein thermisch abtrennbares Azeotrop bilden und ganz besonders bevorzugt Toluol eingesetzt werden, oder dass lösemittelfrei gearbeitet wird.

8. Verfahren nach einem der Ansprüche 1 bis 7, **dadurch gekennzeichnet, dass** der Austausch der am α,ω-Diacetoxypolydimethylsiloxan gebundenen Acetoxygruppen durch Umsetzung mit Polyethermonoolen zu SiOC verknüpften, linearen Polyethersiloxanen in Gegenwart von Lösungsmitteln oder bevorzugt ohne Lösungsmittel durch innige Vermischung der Reaktanden unter Rühren bei Umsetzungstemperaturen von 20°C bis 90°C, bevorzugt bei Umsetzungstemperaturen von 30°C bis 80°C und vorzugsweise im Verlauf von 30 Minuten bis 8 Stunden erfolgt, und/oder, bevorzugt und, dass die Abtrennung der bei der Reaktion zwischen α,ω-Diacetoxypolydimethylsiloxan und Polyethermonoolen freigesetzten und der im System gegebenenfalls vorhandenen Essigsäure vorzugsweise unter Anlegen eines Hilfsvakuums destillativ bei Temperaturen zwischen 60°C und 90°C erfolgt.

9. Verfahren einem der Ansprüche 1 bis 8, **dadurch gekennzeichnet, dass** das molare Verhältnis der Reaktanden so bemessen wird, dass man mindestens 1 Mol an Polyether gebundene OH-Funktionalität pro Mol Acetoxygruppe des α,ω-Diacetoxy-polydimethylsiloxans, bevorzugt 1 bis 2 Mol an Polyether gebundene OH-Funktionalität, besonders bevorzugt 1,1 bis 1,6 Mol an Polyether gebundene OH-Funktionalität, vorzugsweise 1,1 bis 1,4 Mol an Polyether gebundene OH-Funktionalität pro Mol Acetoxygruppe des α,ω-Diacetoxy-polydimethylsiloxans einsetzt.

10. Lineare SiOC-verknüpfte Polydimethylsiloxan-Polyoxyalkylen-Blockcopolymeren des Strukturtyps ABA, erhältlich gemäß einem der Ansprüche 1 bis 9.

11. Verwendung der linearen SiOC-verknüpften Polydimethylsiloxan-Polyoxyalkylen-Blockcopolymere des Strukturtyps ABA nach Anspruch 10 als tensidisches Additiv in nichtkorrosiven Reinigungslösungen, als Entschäumer, als Schaumstabilisatoren, Netzmittel, Lack- und Verlaufsadditive sowie als Dismulgatoren.

## Claims

1. Process for producing SiOC-bonded, linear polydimethylsiloxane-polyoxyalkylene block copolymers of the structure type ABA, **characterized in that** trifluoromethanesulfonic acid-acidified, equilibrated α,ω-diacetoxypolydimethylsiloxane is reacted with polyether monools in the presence of buffer mixtures and optionally an additional condensation catalyst and also optionally in the presence of an inert solvent, wherein the trifluoromethanesulfonic acid-acidified, equilibrated α,ω-diacetoxypolydimethylsiloxane conforms to general formula 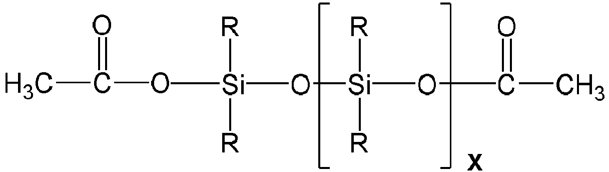 where
R = methyl, and has an average chain length determined by ²⁹Si-NMR spectroscopy of 0 ≤ X ≤ 250, preferably 5 ≤ X ≤ 100, particularly preferably 10 ≤ X ≤ 30, and contains 0.1 to 0.3 percent by mass of trifluoromethanesulfonic acid and 5 to 43 eq%, preferably 11 to 25 eq%, of free acetic anhydride based on the acetic anhydride equivalent chemically bonded in the α,ω-diacetoxypolydimethylsiloxane and is obtainable by a process for producing trifluoromethanesulfonic acid-acidified, equilibrated α,ω-diacetoxypolydimethylsiloxanes in which cyclic siloxanes, especially comprising D₄ and/or D₅, are reacted with acetic anhydride with addition of acetic acid using trifluoromethanesulfonic acid as catalyst.

2. Process according to Claim 1, **characterized in that** the amount of the base used for treatment of the polyether monool in the buffer mixture is such that it corresponds at least to the stoichiometric equivalent, preferably at least to the 2-fold stoichiometric equivalent, of the trifluoromethanesulfonic acid present in the α,ω-diacetoxypolydimethylsiloxane.

3. Process according to either of Claims 1 and 2, **characterized in that** the polyether monool is initially admixed with buffer mixtures and optionally an additional α,ω-diacetoxypolydimethylsiloxane optionally in the presence of an inert solvent and then the liberated acetic acid and the acetic acid that may be present in the system are thermally removed together with the solvent optionally using an azeotrope-forming solvent and the obtained SiOC-bonded, linear polydimethylsiloxane-polyoxyalkylene block copolymer is neutralized by the addition of an auxiliary base, filtered and optionally end-stabilized.

4. Process according to any of Claims 1 to 3, **characterized in that** a condensation catalyst is used for reacting the equilibrated α,ω-diacetoxypolydimethylsiloxane with polyether monools, wherein the condensation catalyst used is Brönstedt acids, here preferably the simple mineral acids and methanesulfonic acid, phosphoric acid, phosphonic acids and/or also acidic salt-type compounds such as triflate salts, especially bismuth triflate, and/or Lewis-acidic compounds such as tin and organotin compounds, titanate esters, tetraalkoxytitanates, zinc acetylacetonate, zinc acetate, trispentafluorophenylborane and very particularly preferably trichloroacetic acid, wherein the condensation catalyst, especially the trichloroacetic acid, is used in the range from 0.1 to 0.7 percent by mass, preferably between 0.2 to 0.5 percent by mass, based on the total amount of the reactants provided for the SiOC bonding reaction, namely α,ω-diacetoxypolydimethylsiloxane and polyether monool.

5. Process according to any of Claims 1 to 4, **characterized in that** the employed buffer mixtures contain at least proportions of the condensation catalyst and particularly preferably here the condensation catalyst in the form of a salt.

6. Process according to any of Claims 1 to 5, **characterized in that** the buffer mixtures comprise sodium trichloroacetate and acetic acid or sodium acetate and acetic acid.

7. Process according to any of Claims 1 to 6, **characterized in that** the solvents employed are aromatic, preferably alkylaromatic, solvents, preferably here those which form a thermally removable azeotrope with acetic acid, and very particularly preferably toluene, or **in that** the process is performed solventlessly.

8. Process according to any of Claims 1 to 7, **characterized in that** the exchange of the acetoxy groups bonded to the α,ω-diacetoxypolydimethylsiloxane by reaction with polyether monools to afford SiOC-bonded linear polyether siloxanes is carried out in the presence of solvents or preferably without solvent by intimate mixing of the reactants with stirring at reaction temperatures of 20°C to 90°C, preferably at reaction temperatures of 30°C to 80°C, and preferably over the course of 30 minutes to 8 hours, and/or, preferably and, **in that** the removal of the acetic acid liberated in the reaction between α,ω-diacetoxypolydimethylsiloxane and polyether monools and the acetic acid that may be present in the system is preferably carried out by distillation at temperatures between 60°C and 90°C with application of an auxiliary vacuum.

9. Process according to any of Claims 1 to 8, **characterized in that** the molar ratio of the reactants is such that at least 1 mol of polyether-bonded OH functionality is employed per mol of acetoxy group of the α,ω-diacetoxypolydimethylsiloxane, preferably 1 to 2 mol of polyether-bonded OH functionality, particularly preferably 1.1 to 1.6 mol of polyether-bonded OH functionality, by preference 1.1 to 1.4 mol of polyether-bonded OH functionality, per mol of acetoxy group of the α,ω-diacetoxypolydimethylsiloxane.

10. Linear SiOC-bonded polydimethylsiloxane-polyoxyalkylene block copolymers of the structure type ABA obtainable according to any of Claims 1 to 9.

11. Use of the linear SiOC-bonded polydimethylsiloxane-polyoxyalkylene block copolymers of the structure type ABA according to Claim 10 as a surfactant additive in noncorrosive cleaning solutions, as defoamers, as foam stabilizers, wetting agents, paint and flow additives and as demulsifiers.

## Revendications

1. Procédé de préparation de copolymères séquencés de polydiméthylsiloxane-polyoxyalkylène liés par SiOC, linéaires du type de structure ABA, **caractérisé en ce qu'**on transforme de l'α,ω-diacétoxypolydiméthylsiloxane acide trifluorométhanesulfonique, équilibré, avec des polyéthermono-ols en présence de mélanges tampon et le cas échéant avec un catalyseur de condensation supplémentaire ainsi que le cas échéant en présence d'un solvant inerte, dans lequel l'α,ω-diacétoxypolydiméthylsiloxane acide trifluorométhanesulfonique, équilibré, satisfait à la formule générale 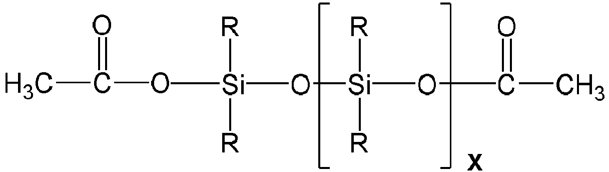 dans laquelle
R = méthyle, et présente une longueur de chaîne, déterminée par spectroscopie ²⁹Si-RMN, de 0 ≤ X ≤ 250, de préférence de 5 ≤ X ≤ 100, de manière particulièrement préférée de 10 ≤ X ≤ 30 ainsi que 0,1 à 0,3% en masse d'acide trifluorométhanesulfonique et 5 à 43% en valence, de préférence 11 à 25% en valence d'anhydride acétique libre, par rapport à l'équivalent d'anhydride acétique lié chimiquement à l'α,ω-diacétoxypolydiméthylsiloxane, et peut être obtenu par un procédé de préparation d'α,ω-diacétoxypolydiméthylsiloxane acide trifluorométhanesulfonique, équilibré, dans lequel on transforme des siloxanes cycliques, comprenant en particulier D₄ et/ou D₅, avec de l'anhydride acétique avec utilisation d'acide trifluorométhanesulfonique en tant que catalyseur, avec ajout d'acide acétique.

2. Procédé selon la revendication 1, **caractérisé en ce que** la quantité de la base utilisée pour la mise en contact avec le polyéthermono-ol dans le mélange tampon de préférence est dimensionnée de telle manière qu'elle correspond au moins à l'équivalent stœchiométrique, de préférence au moins à 2 fois l'équivalent stœchiométrique de l'acide trifluorométhanesulfonique contenu dans l'α,ω-diacétoxypolydiméthylsiloxane.

3. Procédé selon l'une des revendications 1 ou 2, **caractérisé en ce que** ajoute d'abord au polyéthermono-ol, le cas échéant en présence d'un solvant inerte, des mélanges tampon et le cas échéant un α,ω-diacétoxypolydiméthylsiloxane supplémentaire, puis on sépare thermiquement, conjointement avec le solvant, l'acide acétique libéré et l'acide acétique le cas échéant présent dans le système, le cas échéant en faisant appel à un solvant formant un azéotrope, et on neutralise le copolymère séquencé de polydiméthylsiloxane-polyoxyalkylène linéaire, lié par SiOC, obtenu par l'ajout d'une base auxiliaire, on le filtre et on le soumet le cas échéant à une stabilisation finale.

4. Procédé selon l'une des revendications 1 à 3, **caractérisé en ce qu'**on utilise un catalyseur de condensation pour la transformation de l'α,ω-diacétoxypolydiméthylsiloxane équilibré avec des polyéthermono-ols, où on utilise comme catalyseur de condensation des acides de Brönstedt, parmi lesquels de préférence les acides minéraux simples ainsi que l'acide méthanesulfonique, l'acide phosphorique, les acides phosphonique et/ou également des composés acides de type sel tels que les sels de triflate, en particulier le triflate de bismuth et/ou des composés acides de Lewis tels que les composés d'étain et organostanniques, les esters de titanate, les tétraalcoxytitanates, l'acétylacétonate de zinc, l'acétate de zinc, le tris(pentafluorophényl)borane et de manière tout particulièrement préférée l'acide trichloroacétique, le catalyseur de condensation, en particulier l'acide trichloroacétique, étant utilisé dans la plage de 0,1 à 0,7% en masse, de préférence de 0,2 à 0,5% en masse, par rapport à la quantité totale des réactifs prévus pour la réaction de liaison avec SiOC, à savoir l'α,ω-diacétoxypolydiméthylsiloxane et le polyéthermono-ol.

5. Procédé selon l'une des revendications 1 à 4, **caractérisé en ce que** les mélanges tampon utilisés contiennent au moins des proportions du catalyseur de condensation et de manière particulièrement préférée le catalyseur de condensation sous la forme d'un sel.

6. Procédé selon l'une des revendications 1 à 5, **caractérisé en ce que** les mélanges tampon comprennent du trichloroacétate de sodium et de l'acide acétique ou de l'acétate de sodium et de l'acide acétique.

7. Procédé selon l'une des revendications 1 à 6, **caractérisé en ce qu'**on utilise, comme solvant, des solvants aromatiques, de préférence alkylaromatiques, parmi ceux-ci de préférence ceux qui forment un azéotrope séparable thermiquement avec l'acide acétique et de manière tout particulièrement préférée du toluène ou **en ce qu'**on travaille sans solvant.

8. Procédé selon l'une des revendications 1 à 7, **caractérisé en ce que** l'échange des groupes acétoxy liés à l'α,ω-diacétoxypolydiméthylsiloxane a lieu par transformation avec des polyéthermono-ols en polyéthersiloxanes liés par SiOC, linéaires en présence de solvants ou de préférence sans solvant, par mélange intime des réactifs sous agitation à des températures de transformation de 20°C à 90°C, de préférence à des températures de transformation de 30°C à 80°C et de préférence sur une période de 30 minutes à 8 heures et/ou, de préférence et, **en ce que** la séparation de l'acide acétique libéré lors de la réaction entre l'α,ω-diacétoxypolydiméthylsiloxane et les polyéthermono-ols et de l'acide acétique le cas échéant présent dans le système a de préférence lieu, sous application d'un vide auxiliaire, par distillation à des températures entre 60°C et 90°C.

9. Procédé selon l'une des revendications 1 à 8, **caractérisé en ce que** le rapport molaire des réactifs est dimensionné de telle manière qu'on utilise au moins 1 mole de fonctionnalité OH liée au polyéther par mole de groupe acétoxy de l'α,ω-diacétoxypolydiméthylsiloxane, de préférence 1 à 2 moles de fonctionnalité OH liée au polyéther, de manière particulièrement préférée 1,1 à 1,6 mole de fonctionnalité OH liée au polyéther, de préférence 1,1 à 1,4 mole de fonctionnalité OH liée au polyéther par mole de groupes acétoxy de l'α,ω-diacétoxypolydiméthylsiloxane.

10. Copolymères séquencés de polydiméthylsiloxane-polyoxyalkylène linéaires liés par SiOC, du type de structure ABA, pouvant être obtenus selon l'une des revendications 1 à 9.

11. Utilisation des copolymères séquencés de polydiméthylsiloxane-polyoxyalkylène linéaires liés par SiOC, du type de structure ABA, selon la revendication 10 en tant qu'additif tensioactif dans des solutions de nettoyage non corrosives, en tant qu'antimousses, en tant que stabilisants de mousse, agents mouillants, additifs pour vernis et d'étalement ainsi qu'en tant que désémulsifiants.
